# EUROPÄISCHE PATENTANMELDUNG

(11) **EP 1 818 665 A2**
(43) Veröffentlichungstag der Anmeldung: **15.08.2007**
(21) Anmeldenummer: 07100116.8
(22) Anmeldetag: 04.01.2007
(51) Int. Cl.: G01N 15/02

(54) **Partikelsensor**

(30) Priorität: 10.02.2006 DE 102006006112
(71) Anmelder: ROBERT BOSCH GMBH, 70442 Stuttgart (DE)
(72) Erfinder: Ochs, Thorsten, 71701, Schwieberdingen (DE); Schittenhelm, Henrik, 70182, Stuttgart (DE); Coclici, Cristian-Aurelian, 70195, Stuttgart (DE); Baars, Enno, 70839, Gerlingen (DE); Klett, Sascha, 71570, Oppenweiler (DE)

(57) **Zusammenfassung**

Die vorliegende Erfindung betrifft einen Sensor (1) zur Sensierung von Partikeln in einem Gasstrom, insbesondere zur Sensierung von Rußpartikel in Abgasen von Verbrennungsvorrichtungen, mit einer Partikelsensiereinheit (3) und einer diese zumindest teilweise umgebenden Gasproben-Separiereinheit (2). Sie zeichnet sich dadurch aus, dass sie dem Gasstrom an der Partikelsensiereinheit (3) definierte Strömungseigenschaften in Abhängigkeit der Strömungseigenschaften in dem zu prüfenden Gasstrom aufprägt. Sie zeichnet sich weiterhin dadurch aus, dass die Gasproben-Separiereinheit größen- und/oder massenselektiv wirksam ausgebildete Partikel-Selektiermittel (4) umfasst.

## Beschreibung

Die vorliegende Erfindung betrifft einen Partikelsensor nach dem Oberbegriff des Anspruchs 1.

Stand der Technik Zur Detektion von Partikeln in Messgasen, insbesondere zur Detektion von Rußpartikeln in Abgasen von Verbrennungsvorrichtungen, ist es bekannt, entsprechend ausgebildete Sensoren direkt einem zu überwachenden Gasstrom auszusetzen. Entsprechend der in dem zu überwachenden Gasstrom auftretenden Partikelmasse, Partikelmenge, bzw. -konzentration liefert der Sensor ein entsprechendes Messsignal.

Aus der WO 03/006 976 sind zum Beispiel ein entsprechender Sensor und ein Verfahren zur Detektion von Partikeln in einem Gasstrom bekannt. Dabei soll mit einer sogenannten "Fanghülse" zur Detektion von Partikeln in einem zu überwachenden Gasstrom eine Gasprobe separiert werden. Eine in der Fanghülse angeordnete Partikelsensiereinheit liefert ein dem Partikelaufkommen entsprechendes Messsignal.

Mit einer derartigen Vorrichtung ist jedoch keine differenzierte Aussage über die Anzahl bzw. Menge von Partikeln bestimmter Größen möglich, da alle in der Gasprobe enthaltenen Partikel in das bei der Auswertung entstehende Messsignal eingehen und darüber hinaus aufgrund der instationären und stark mit Turbulenzen behafteten Gasströmung die Anlagerung unkontrolliert stattfindet und damit die Signalinterpretation unmöglich macht. Darüber hinaus ist aufgrund der instabilen Strömungsbedingung in einem solchen Fall keine kontinuierliche und kontrollierte Anlagerung der im Abgasstrom mitgetragenen Partikel gewährleistet.

Weiterhin sind Verfälschungen des Messsignales dahingehend möglich, dass insbesondere durch große Partikel bzw. "Rußflocken" ein vom tatsächlichen Partikelanteil im Gasstrom abweichendes Messsignal erzeugt wird. Dies kann z.B. durch eine Irritation der Partikelsensiereinheit verursacht werden.

Im Weiteren ist dieser bekannte Partikelsensor anfällig auf Störung seines Messsignals bzw. sogar auch auf eine Beschädigung der Partikelsensiereinheit durch andere, ebenfalls im zu messenden Gas auftretende Partikel, wie z.B. Wasser-, Öl- oder Säuretröpfchen und dergleichen mehr. Insbesondere kritisch sind hierbei niedrig temperierte Teilchen, die der Partikelsensiereinheit einen Thermoschock versetzen können. Die Partikelsensiereinheit kann dabei massiv beschädigt oder sogar vollständig zerstört werden.

### Aufgabe und Vorteile der vorliegenden Erfindung

Der vorliegenden Erfindung liegt die Aufgabe zugrunde, einen Sensor der einleitend genannten Art zu verbessern.

Diese Aufgabe wird durch die Merkmale der Ansprüche 1 und 2 gelöst. In den Unteransprüchen sind vorteilhafte und zweckmäßige Weiterbildungen der Erfindung angegeben.

Dementsprechend betrifft die vorliegende Erfindung einen Sensor zur Sensierung von Partikeln in einem Gasstrom, insbesondere zur Sensierung von Rußpartikeln in Abgasen von Verbrennungsvorrichtungen, mit einer Partikelsensiereinheit und einer diese zumindest teilweise umgebenden Gasproben-Separiereinheit. Sie zeichnet sich in einer ersten Ausführungsform dadurch aus, dass sie dem Gasstrom an der Partikelsensiereinheit definierte Strömungseigenschaften in Abhängigkeit der Strömungseigenschaften in dem zu prüfenden Gasstrom aufprägt. Insbesondere kann sie die Strömungsgeschwindigkeit am Sensorelement in direkter Abhängigkeit von der Strömungsgeschwindigkeit des zu prüfenden Gasstroms definieren. Weiterhin kann sie sowohl strömungsberuhigend als auch -formend wirken.

Insbesondere vorteilhaft kann durch eine geeignete Ausgestaltung der Gasproben-Separiereinheit auch bei stark schwankenden Druck- bzw. Strömungsverhältnissen im zu prüfenden Gasstrom eine definierte An- und/oder Überströmung des detektierenden Sensorelementes erreicht werden. So kann beispielsweise durch entsprechend ausgebildete bzw. angeordnete Leitelemente auch in Abgasanlagen von Verbrennungsmaschinen, mit Strömungsschwankungen von ca. 7 m/s im Standgasbetrieb bis ca. 70 m/s im Vollgasbetrieb, eine definierte Anströmung des Sensorelementes über die gesamte Schwankungsbreite der Strömungsgeschwindigkeit gewährleistet werden. Ein Abreißen der Sensorelement-Gassanströmung kann damit definitiv verhindert werden. Der Sensor liefert ein stetiges Signal. Durch die Berücksichtigung der Strömungsgeschwindigkeit im Abgasstrang kann dieses Signal im Weiteren auch noch parametriert werden.

In einer zweiten Ausführungsform kann sie sich auch dadurch auszeichnen, dass die Gasproben-Separiereinheit größen- und/oder massenselektiv wirksam ausgebildete Partikel-Selektiermittel umfasst.

Selektiert werden überwiegend "Rußflocken", d.h. Größen, die sehr weit von den eigentlichen Partikelgrößen entfernt sind.

Dem Aufbau eines derartigen Sensors liegt die Erkenntnis zugrunde, dass durch die Vorauswahl einer bestimmten Bandbreite an Partikelgrößen bzw. Partikelmassen eine wesentlich genauere quantitative Aussage bzgl. der selektierten Partikelgrößen bzw. Partikelmassen möglich ist, als ohne solche Selektiermittel. Damit gehen unter anderem folgende Vorteile einher: Stabilisierung der Strömungsbedingungen unabhängig von den Abgasparametern (Abgasgeschwindigkeit) kontrollierte und reproduzierbare Anströmung des im Schutzrohr verbauten Sensorelements - interpretierbarer Signalverlauf.

Im Weiteren ist auch sichergestellt, das negative Einwirkungen auf die Partikelsensiereinheit bzw. auch auf das Messergebnis durch außerhalb des selektierten Bereichs liegende Partikelgrößen und/oder Partikelmassen verhindert werden können.

In einer ersten Ausführungsform können die Partikel-Selektiermittel eines derart aufgebauten Partikelsensors mechanische Selektiermittel umfassen. Diese können robust aufgebaut werden und bieten einen zuverlässigen mechanischen Schutz. Beispielsweise können mit einer einen freien Zugangsquerschnitt zur Partikelsensiereinheit begrenzenden Einlassöffnung nur derartige im Gas befindliche Partikel durch sie hindurchtreten, die gleich groß oder kleiner als ihr freier Querschnitt sind.

Im Weiteren kann der Partikelsensor, entsprechend bestimmter Anforderungen an die Messsituation, z.B. hohe oder niedrige Strömungsgeschwindigkeiten des Messgases, hohes oder niedriges zu erwartendes Partikelaufkommen und dergleichen mehr, zusätzlich weitere Merkmale aufweisen.

In einer möglichen Ausführungsform kann dabei eine Einlassöffnung der Gasproben-Separiereinheit parallel zu einer Längsachse der Gasproben-Separiereinheit ausgebildet sein. Zum Beispiel kann damit die Einlassöffnung der Gasproben-Separiereinheit quer zu einer Strömungsrichtung des den Sensor umströmenden und zu überwachenden Gasstroms ausgebildet bzw. ausgerichtet werden. In Zusammenwirkung mit einer davon beabstandet angeordneten Ausgangsöffnung kann damit im Inneren des Sensors ein Differenzdruck zur Erzeugung eines den Sensor durchströmenden Gasstroms erzeugt werden.

Ein solcher Aufbau ist beispielsweise bei hohem Partikelaufkommen vorteilhaft einsetzbar, da mit ihm eine weitere Einflussnahme auf die Bestimmung der Partikelmenge durch ein entsprechend eingestelltes Verhältnis zwischen um- und durchströmenden Gasstrom zur Verfügung gestellt werden kann. Damit ist es möglich, mit einem verhältnismäßig geringen, abgezweigten Teil des Gasstromes, und damit verhältnismäßig geringer Belastung der Partikelsensiereinheit durch ein bekanntes Vervielfachungsverhältnis eine genaue Aussage über die Gesamtpartikelbelastung im Gasstrom zu erhalten.

In einer davon abgewandelten Ausführungsform kann z.B. eine Einlassöffnung der Gasproben-Separiereinheit auch radial zu einer Längsachse der Gasproben-Separiereinheit ausgebildet sein. Damit ist es möglich, die Einlassöffnung der Gasproben-Separiereinheit der Strömungsrichtung des den Sensor umströmenden Gasstroms entgegengerichtet auszubilden bzw. anzuordnen. Eine solche Ausführungsform ist insbesondere bei geringem, zu erwartenden Partikelaufkommen vorteilhaft. Alle in der zu selektierenden Partikel-Bandbreite liegenden Partikel des die Eintrittsöffnung beströmenden Gasteilstromes können mit einem derart aufgebauten Partikelsensor erfasst werden.

Weitere Einflussmöglichkeiten auf die Messempfindlichkeit des Sensors sind beispielsweise durch Einflussnahmen auf die Außenkontur und/oder auf die Innenkontur des Partikelsensors möglich. Insbesondere kann damit die Durchströmgeschwindigkeit des die Gasproben-Separiereinheit durchströmenden Gasstroms beeinflusst werden. Je nach Ausbildung der Konturen kann diese gegenüber der Strömungsgeschwindigkeit des zu messenden Gasstroms erhöht oder abgesenkt werden.

Damit ist es ebenfalls unter anderem möglich, die Anzahl der die Gasproben-Separiereinheit durchströmenden und die Partikelsensiereinheit beaufschlagenden Partikel zur Erzielung eines verbesserten Messergebnisses zu beeinflussen.

Weitere Einflussnahmen auf die Selektivität des Sensors sind durch zusätzliche Mittel zur Umlenkung des die Gasproben-Separiereinheit durchströmenden, und damit die Partikelsensiereinheit beaufschlagenden Gasstroms möglich. Solche Mittel zur Umlenkung können unter anderem im Strömungsverlauf angeordnete Leit- und/oder Prallbleche sein. Sie können insbesondere auch als Begrenzungen der Einlassöffnungen oder auch weiterer, in der Gasstromführung angeordneter Durchlassöffnungen ausgebildet sein.

Neben einer ersten, die Partikelsensiereinheit in der Form der Gasproben-Separiereinheit umgebenden Hülle können solche Umlenkmittel eine zweite derartige Hülle umfassen. Z.B. könnten zwei solche Hüllen als doppelwandige Hülse aufgebaut sein, in denen entsprechende Durchlassöffnungen angeordnet bzw. ausgebildet sind, und die die Partikelsensiereinheit Partikelgrößen selektierend, die Gasströmung formend, beruhigend und zugleich auch schützend umgeben.

Bei entsprechender Ausbildung und Anordnung der beiden Hülsenwände kann der die Gasproben-Separiereinheit durchströmende Gasstrom so geführt werden, dass er zumindest einmal in etwa um 90° umgelenkt wird, vorzugsweise zusätzlich ein weiteres Mal, gegebenenfalls sogar um mehr als 180°. Bei diesen Gasstrom-Umlenkungen kann dem Gasstrom, beispielsweise bei einem etwa zylindrischen Aufbau der Hülsen, sowohl eine axiale als auch eine rotatorische Strömungsrichtung aufgeprägt werden, so dass dieser die Partikelsensiereinheit sowohl in deren Längsrichtung als auch in deren Umfangsrichtung umströmt.

Ein weiterer Effekt einer solchen Strömungsführung ist eine zusätzliche Partikel-Selektivität anhand der dabei auftretenden Zentrifugalkräfte, insbesondere bei scharfen Umlenkungen des Gasstroms. Die Selektivität eines derart aufgebauten Partikelsensors kann dabei sogar so eingestellt werden, dass die Partikelsensiereinheit lediglich anhand von Diffusionskräften durch die im Gasstrom befindlichen Partikel zur Erzeugung des Messsignals beaufschlagt wird.

Als Partikelsensiereinheit kann beispielsweise ein resistives Partikelsensorelement verwendet werden, welches z.B. in der Form einer interdigitalen Elektrodenstruktur auf einem entsprechenden Trägerelement ausgebildet ist. Das Messsignal wird anhand einer Widerstandsänderung erzeugt, die aufgrund von Partikelablagerungen zwischen sich gegenüberliegenden Elektrodenfingern hervorgerufen wird.

Die im Laufe der Betriebszeit entstehenden Ablagerungen auf der Partikelsensiereinheit können von Zeit zu Zeit mittels entsprechenden Maßnahmen entfernt werden. Insbesondere bevorzugt wird hierbei die Verwendung von Heizelementen, die die Partikelsensiereinheit so weit erhitzen, dass die darauf befindlichen Partikel abgebrannt werden.

Ablagerungen an den verschiedenen Öffnungen der Gasproben-Separiereinheit beeinflussen ebenfalls das Messsignal. Diese Ablagerungen pendeln sich im Laufe der Betriebsdauer jedoch auf einen bestimmten Wert ein, so dass dieser bereits beim Aufbau des Sensors bzw. auch bei der Kalibrierung der Partikelsensiereinheit berücksichtigt werden kann.

### Ausführungsbeispiel

Die Erfindung wird anhand der Zeichnungen und der nachfolgenden, darauf Bezug nehmenden Beschreibung näher erläutert. Es zeigen:
- Figur 1 und 2: eine Gasproben-Separiereinheit für einen erfindungsgemäßen Sensor zur Sensierung von Partikeln in einem Gasstrom als Schnittdarstellung in schräger Draufsicht (Figur 1) und in Frontansicht (Figur 2);
- Figur 3: eine Ausführungsform entsprechend der Figur 1 mit einer darin angeordneten Partikelsensiereinheit und symbolisch durch Pfeile dargestellte Strömungsverhältnisse eines die Gasproben-Separiereinheit durchströmenden Gasstroms;
- Figur 4: eine weitere Ausführungsform eines Sensors zur Sensierung von Partikeln in einem Gasstrom in schräger Draufsicht auf eine Schnittdarstellung;
- Figur 5 und 6: zwei schräge Draufsichten auf die zweite Ausführungsform in geschlossener Darstellung; und
- Figur 7: eine schematische Darstellung eines Sensors entsprechend der zweiten Ausführungsform, mit ebenfalls symbolisch darin dargestellter Gasstromführung im Inneren der Gasproben-Separiereinheit.

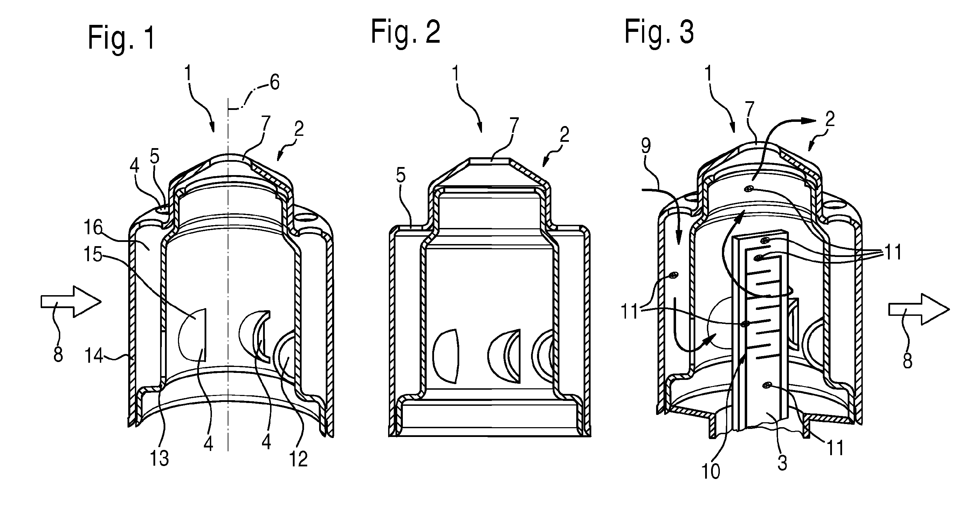

Die Figuren 1 bis 3 zeigen eine erste Ausführungsform eines Sensors 1 zur Sensierung von Partikeln in einem Gasstrom. Sie umfasst eine Gasproben-Separiereinheit 2 und eine von dieser zumindest teilweise umgebenen Partikelsensiereinheit 3. Diese Anordnung kann zur quantitativen Bestimmung von Partikeln in einen zu überwachenden Gasstrom von mobilen oder auch immobilen Verbrennungsvorrichtungen eingebracht werden. Zur Überwachung sind hierbei insbesondere Abgasstränge von Dieselmotoren aber auch andere Abgasstränge, wie z.B. die von Heizanlagen denkbar.

Die Figur 1 zeigt eine Gasproben-Separiereinheit 2 in schräger Draufsicht als Schnittdarstellung, wie sie zur Erfassung von Partikeln in einem Gasstrom angeordnet werden kann.

Um eine quantitative Aussage zu Partikeln bestimmter Größen und/oder Massen in dem zu überwachenden Gasstrom tätigen zu können, umfasst sie erfindungsgemäß entsprechend selektiv ausgebildete Partikel-Selektiermittel 4. Im vorliegenden Fall sind diese mechanisch ausgebildet.

Ein erstes Selektiermittel 4 wird z.B. durch eine den freien Zugangsquerschnitt zur Partikelsensiereinheit 3 begrenzende Einlassöffnung 5 realisiert. In der Ausführungsform nach den Figuren 1 bis 3 ist diese in etwa parallel zu einer Längsachse 6 der Gasproben-Separiereinheit ausgebildet. Die Längsachse 6 verläuft in diesem Ausführungsbeispiel durch eine Auslassöffnung 7, für den die Gasproben-Separiereinheit 2 durchströmenden Teil des zu überwachenden Gasstromes. Für diese Ausführungsform ist es vorgesehen, dass mehrere Einlassöffnungen 5 an der Gasproben-Separiereinheit 2 ausgebildet und derart angeordnet sind, dass sie in etwa quer zu einer Strömungsrichtung des den Sensor 1 umströmenden Gasstroms 8 ausgerichtet sind.

Der die Gasproben-Separiereinheit 2 durchströmende Teil des Gasstromes 9 trägt die in ihm enthaltenen Partikel entlang des durch die Pfeile 9 dargestellten Strömungsweges in Richtung zur Partikelsensiereinheit 3. Der Gasstrom 9 umströmt dabei die Partikelsensiereinheit 3 derart, dass sich die in ihm befindlichen Partikel auf der hier beispielhaft als Partikelsensiereinheit 3 dargestellten interdigitalen Elektrodenstruktur 10 ablagern können. Ebenfalls beispielhaft sind entlang des Strömungswegs des Gasstroms 9 und auf der Oberfläche der Partikelsensiereinheit 3 Partikel 11 dargestellt. Es ergeben sich daraus die Vorteile:
- reproduzierbare Strömungsrichtung und Geschwindigkeit je Motorbetriebspunkt;
- eindeutige Korrelation zwischen V_{Abgasströmung} und V_{am Sensorelement}
- kontrollierte Strömungsbewegungen

Im Weiteren weist die Gasproben-Separiereinheit 2 Mittel zur Umlenkung des sie durchströmenden Teils des zu überwachenden Gasstroms in der Form von Durchlassöffnungen 12 auf, die in einer im Inneren der Gasproben-Separiereinheit 2 ausgebildeten Hülle angeordnet sind. Diese Hülle ist in der Form eines Innenrohres 13 der in dieser Ausführungsform als doppelwandiges Schutzrohr ausgebildeten Gasproben-Separiereinheit 2 realisiert. Die äußere Hülle schließt mit ihr einen Zwischenraum 16 ein, und wird durch das Außenrohr 14 definiert, in dem in einer stirnseitigen Umbördelung mehrere Einlassöffnungen 5 angeordnet sind.

Ein weiteres Mittel zur Umlenkung des Teil-Gasstroms 9 stellen entlang dessen Verlaufs angeordnete Leit- bzw. Prallbleche 15 dar. Vorzugsweise sind diese im Umgebungsbereich von Durchlässen angeordnet, wie z.B. bei den Durchgangsöffnungen 12.

Einerseits lenken sie den bereits einmal um etwa 90° umgelenkten Teil des Gasstromes 9 aus einer Längsströmrichtung in eine mit einer rotierenden Komponente beaufschlagten Strömungsrichtung im Inneren des Innenrohres 13 um. Andererseits bewirkt jede Umlenkung des Gasstroms eine Zentrifugalkraft auf die in ihm befindlichen Partikel und somit eine selektive Wirkung anhand der dabei auftretenden Querbeschleunigungen. Partikel mit zu großer Masse prallen dabei auf die Platte oder werden in einem anderen Wandbereich in einer der Einlassöffnung nachselektierenden Weise abgelagert.

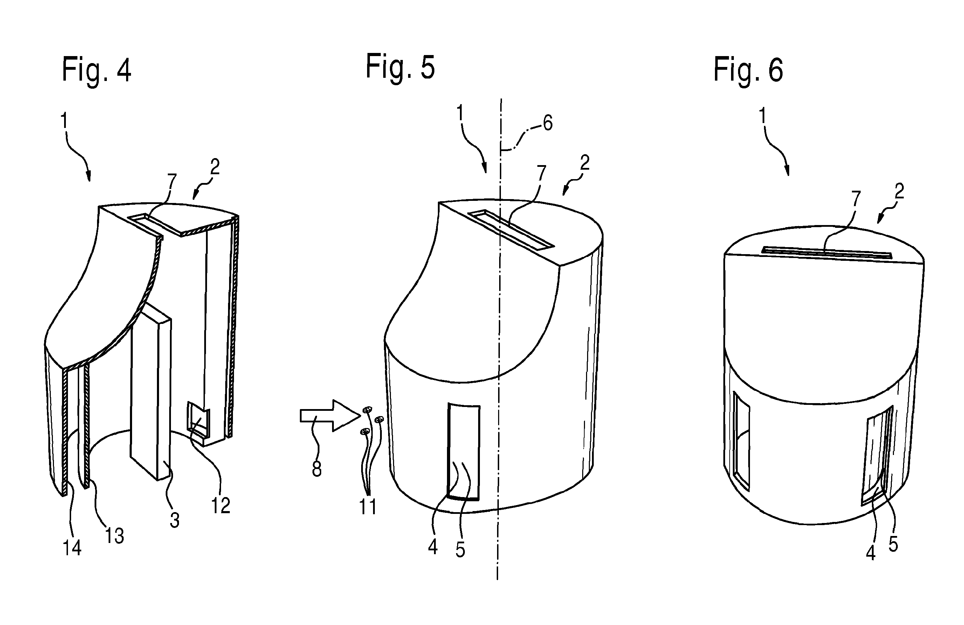

Die Figur 4 zeigt eine zweite Ausführungsform eines Partikelsensors mit einer gegenüber der ersten Ausführungsform abgewandelten Gasproben-Separiereinheit 12. Für die gleichen Funktionen, wie in der ersten Ausführungsform beschrieben, sind auch hier die gleichen Bezugszeichen vergeben.

Diese Ausführungsform ist dazu vorgesehen, derart in den zu überwachenden Gasstrom 8 angeordnet zu werden, dass eine an ihm ausgebildete Einlassöffnung 5 direkt in der Strömungsrichtung des Gasstroms 8 angeordnet ist. Dazu ist die Einlassöffnung 5 radial zu einer Längsachse 6 dieser Ausführungsform der Gasproben-Separiereinheit 2 ausgerichtet angeordnet.

Um eine besonders gute Fangeigenschaft für in dem zu überwachenden Gasstrom 8 befindliche Partikel 11 zur Verfügung stellen zu können, kann die Einlassöffnung 5 beispielsweise in der Form eines länglichen, günstige Strömungseigenschaften aufweisenden Schlitzes ausgebildet sein, der ebenfalls in einen Zwischenraum 16 zwischen dem Innenrohr 13 und dem Außenrohr 14 mündet. Dieser Zwischenraum 16 mündet seinerseits, ebenfalls wie in der ersten Ausführungsform, über eine Durchlassöffnung 12 in den Innenraum des Innenrohres 13. Dadurch ergeben sich die Vorteile:
- hohe Strömungsgeschwindigkeit;
- hohe Empfindlichkeit bei niedriger Partikelkonzentration;
- kontrollierte und definierte Sensorelementanströmung
- reproduzierbare und definierte Signalbildung;
- hohe Geschwindigkeit der Sonde.

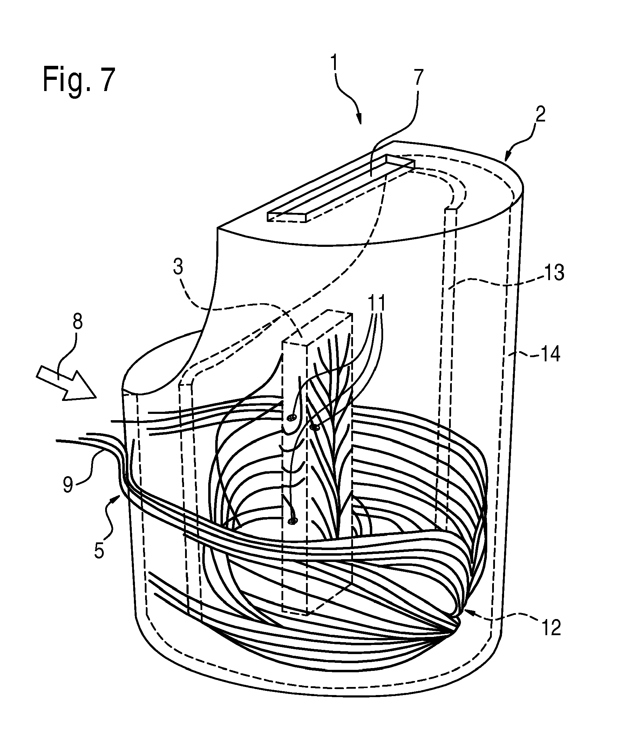

In der Figur 7 ist ein schematischer Verlauf des Gasstroms 9 dargestellt. Er tritt durch die Einlassöffnung 5 in den Zwischenraum 16 ein, und aus diesem durch die Durchlassöffnung in den Innenraum des Innenrohres 13. Darin umströmt er die Partikelsensiereinheit 3, auf der sich in ihm befindliche Partikel ablagern können. Zur besseren Übersicht wurde auf die Darstellung des weiteren Verlaufs des Gasstroms, hin zur Auslassöffnung 7, verzichtet.

## Patentansprüche

1. Sensor (1) zur Sensierung von Partikeln in einem Gasstrom, insbesondere zur Sensierung von Rußpartikel in Abgasen von Verbrennungsvorrichtungen, mit einer Partikelsensiereinheit (3) und einer diese zumindest teilweise umgebenden Gasproben-Separiereinheit (2), **dadurch gekennzeichnet, dass** die Gasproben-Separiereinheit so ausgebildet ist, dass sie dem Gasstrom an der Partikelsensiereinheit (3) definierte Strömungseigenschaften in Abhängigkeit der Strömungseigenschaften in dem zu prüfenden Gasstrom aufprägt.

2. Sensor (1) zur Sensierung von Partikeln in einem Gasstrom, insbesondere zur Sensierung von Rußpartikel in Abgasen von Verbrennungsvorrichtungen, mit einer Partikelsensiereinheit (3) und einer diese zumindest teilweise umgebenden Gasproben-Separiereinheit (2), **dadurch gekennzeichnet, dass** die Gasproben-Separiereinheit größen- und/oder massenselektiv wirksam ausgebildete Partikel-Selektiermittel (4) umfasst.

3. Sensor nach Anspruch 1 oder 2, **dadurch gekennzeichnet, dass** die Partikel-Selektiermittel (4) mechanische Selektiermittel umfassen.

4. Sensor nach Anspruch 1, 2 oder 3, **dadurch gekennzeichnet, dass** die Partikel-Selektiermittel eine einen freien Zugangsquerschnitt zur Partikelsensiereinheit begrenzende Einlassöffnung (5) umfassen.

5. Sensor nach einem der vorangehenden Ansprüch, **dadurch gekennzeichnet, dass** eine Einlassöffnung (5) der Gasproben-Separiereinheit parallel zu einer Längsachse (6) der Gasproben-Separiereinheit ausgebildet ist.

6. Sensor nach einem der vorangehenden Ansprüche, **dadurch gekennzeichnet, dass** eine Einlassöffnung (5) der Gasproben-Separiereinheit quer zu einer Strömungsrichtung des den Sensor (1) umströmenden Gasstroms (8) ausgebildet ist.

7. Sensor nach einem der vorangehenden Ansprüche, **dadurch gekennzeichnet, dass** eine Einlassöffnung der Gasproben-Separiereinheit radial zu einer Längsachse der Gasproben-Separiereinheit ausgebildet ist.

8. Sensor nach einem der vorangehenden Ansprüche, **dadurch gekennzeichnet, dass** eine Einlassöffnung der Gasproben-Separiereinheit der Strömungsrichtung des den Sensor umströmenden Gasstroms entgegengerichtet ausgebildet ist.

9. Sensor nach einem der vorangehenden Ansprüche, **dadurch gekennzeichnet, dass** die Gasproben-Separiereinheit eine die Durchströmgeschwindigkeit vᵢ des sie durchströmenden Gasstromes beeinflussende Aussenkontur aufweist.

10. Sensor nach einem der vorangehenden Ansprüche, **dadurch gekennzeichnet, dass** die Gasproben-Separiereinheit eine die Durchströmgeschwindigkeit vᵢ des sie durchströmenden Gasstromes beeinflussende Innenkontur aufweist.

11. Sensor nach einem der vorangehenden Ansprüche, **dadurch gekennzeichnet, dass** die Partikel-Selektiermittel Mittel (4) zur Umlenkung eines die Gasproben-Separiereinheit durchströmenden Gasstromes umfassen.
